# NEUE EUROPÄISCHE PATENTSCHRIFT

(11) **EP 3 471 997 B2**
(45) Veröffentlichungstag und Bekanntmachung des Hinweises auf die Entscheidung über den Einspruch: **19.08.2026**
(45) Hinweis auf die Patenterteilung: 10.05.2023
(21) Anmeldenummer: 18708387.8
(22) Anmeldetag: 27.02.2018
(51) Int. Cl.: B60M 1/30, B60M 1/36

(54) **BEFESTIGUNGSVORRICHTUNG FÜR EINE SCHLEIFLEITUNG UND SCHLEIFLEITUNGSSYSTEM**
FASTENING DEVICE FOR A CONDUCTOR LINE AND CONDUCTOR LINE SYSTEM
DISPOSITIF DE FIXATION D'UNE LIGNE DE CONTACT ET SYSTÈME DE LIGNE DE CONTACT

(30) Priorität: 31.05.2017 DE 102017111984
(43) Veröffentlichungstag der Anmeldung: 24.04.2019
(73) Patentinhaber: Conductix-Wampfler GmbH, 79576 Weil am Rhein (DE)
(72) Erfinder: HAGIN, Moritz, 79576 Weil am Rhein (DE); LANG, Dietmar, 79418 Schliengen (DE)
(74) Vertreter: Charrier Rapp & Liebau
(86) Internationale Anmeldenummer: PCT/EP2018/054790
(87) Internationale Veröffentlichungsnummer: WO 2018/219506

(56) Entgegenhaltungen:
- EP-A2- 0 262 607
- WO-A1-2016/023705
- DE-A1- 102004 008 571
- DE-A1- 102015 120 345
- DE-A1- 102016 102 912
- DE-A1- 3 440 776
- DE-U1- 202014 102 490
- JP-U- S5 618 225
- JP-U- S5 757 129
- Produktkatalog ,,ProfiDAT® Data Transmission System
- "Lagerungskonzepte", WIKIPEDIA, 20 October 2016 (2016-10-20), XP093162412, Retrieved from the Internet <URL:https://de.wikipedia.org/w/index.php?title=Lagerungskonzepte&oldid=158923633>
- Technische Zeichnung
- CONDUCTIX-WAMPFLER: "Conductor Rail System for Shuttles MultiLine Program 0835", 2015, XP055477314, Retrieved from the Internet <URL:http://www.conductix.nl/sites/default/files/downloads/KAT0835-0001-E_Conductor_Rail_System_for_Shuttles_MultiLine_Program_0835.pdf> [retrieved on 20180522]

## Beschreibung

Die Erfindung betrifft eine Befestigungsvorrichtung für eine Schleifleitung nach dem Oberbegriff des Anspruchs 1 sowie ein Schleifleitungssystem nach dem Oberbegriff des Anspruchs 9.

Die DE 2 246 681 offenbart eine Schleifleitung, bei der zwischen zwei Schleifleitungs-Kanalanschlüssen zwei Übergangsstücke angeordnet sind, um einen in Längserstreckung der Schleifleitung auftretenden Querversatz der beiden Schleifleitungs-Kanalanschlüsse auszugleichen. Dazu ist an den Schleifleitungs-Kanalanschlüssen jeweils ein Übergangsstück mittels einer Kreuzgelenksverbindung angeordnet. Weiter weist eines der Übergangsstücke einen Trichter auf, in den ein am anderen Übergangsstück angeordnetes Gestänge mittels eines Stellzylinders eingefahren werden kann, wodurch zusätzlich ein Versatz zwischen den Übergangsstücken ausgeglichen werden kann. Ein Versatz in Längsrichtung, wie er beispielsweise durch temperaturbedingte Ausdehnungen der Schleifleitungen auftreten kann, kann dort allenfalls durch die räumlich im Abstand zueinander angeordneten Übergangsstücke ausgeglichen werden. Dabei ist jedoch nachteilig, dass sich zwischen den beiden Übergangsstücken wie auch zwischen den Übergangsstücken und den jeweils sich daran anschließenden Schleifleitung-Kanalanschlüssen ein Spalt auftut, welcher für das Durchfahren mit Schleifleitungsstücken nachteilig ist.

Die JP 2016-041 552 A offenbart ein Verbindungsstück für aneinanderstoßende Enden von Schleifleitungen einer Elektrohängebahn. Das Verbindungsstück hält die beiden Enden der Schleifleitungen gegeneinander fest, lässt aber gegen Federdruck ein gewisses Spiel in Längsrichtung der Schleifleitungen zu.

Der Prospekt "Sicherheits-Schleifleitungen KBSL und KSL" der Fa. Paul Vahle GmbH & Co. KG offenbart eine Kastenschleifleitung, welche mittels einer das Schleifleitungsprofil außenseitig umgreifenden Gleitaufhängung aufgehängt werden kann.

Der Produktprospekt "Conductor Rail System for Shuttles MultiLine Program 0835" der Conduction-Wampfler GmbH aus dem Jahr 2015 offenbart ein gattungsgemäßes Schleifleitungssystem mit einer Schleifleitung, welche einerends eine Endkappe aufweist, die mittels eines Endkappenstegs in Längs- und Querrichtung fest mit einer Montagefläche verbunden ist. Andernends ist das Ende der Schleifleitung nur mit einer Endkappe versehen und in Längs- und Querrichtung gegenüber der Montagefläche beweglich gelagert.

Die JP S56 18225 U offenbart eine weitere Befestigungsvorrichtung.

Aufgabe der vorliegenden Erfindung ist es deshalb, die obigen Nachteile zu beseitigen und die Schleifleitung sicher zu halten, und bevorzugt eine zum Beispiel durch Temperatureffekte bedingte Längsausdehnung einer Schleifleitung auf einfache Weise auszugleichen.

Die Erfindung löst diese Aufgabe durch eine Befestigungsvorrichtung für eine Schleifleitung mit den Merkmalen des Anspruchs 1 sowie ein Schleifleitungssystem mit den Merkmalen des Anspruchs 9. Vorteilhafte Weiterbildungen und Ausgestaltungen der Erfindung sind in den Unteransprüchen angegeben.

Eine eingangs genannte Befestigungsvorrichtung ist erfindungsgemäß dadurch gekennzeichnet, dass die Befestigungsvorrichtung ein Verbindungsstück zur festen Befestigung an der Schleifleitung einerseits und zur in Längsrichtung beweglichen Verbindung mit dem Halteelement andererseits aufweist. Hierdurch kann eine sichere Befestigung der Schleifleitung erreicht werden. Ein vorteilhafter Aspekt der Erfindung sieht alternativ oder zusätzlich zu der eben genannten Befestigungsvorrichtung vor, dass das Halteelement die Schleifleitung in ihrer Längsrichtung beweglich an dem Montageelement hält.

Bevorzugt kann das Halteelement Fixiervorsprünge und/oder Fixierausnehmungen aufweisen, die in korrespondierende Fixierausnehmungen und/oder Fixiervorsprünge an der Schleifleitung oder dem Verbindungsstück eingreifen. Dabei können die Fixiervorsprünge zur einfachen Entfernung eine Materialdünnstelle insbesondere eine Sollbruchstelle aufweisen.

Bevorzugt kann das Verbindungsstück ein Ein- und/oder Ausfahrtrichter für Schleifkontakte eines längs der Schleifleitung beweglichen elektrischen Verbrauchers sein.

In einer vorteilhaften Ausgestaltung kann das Halteelement einander quer zur Längsrichtung gegenüberliegende Schenkel aufweisen, welche die Schleifleitung und/oder das Verbindungsstück umgreifen. Hierdurch kann eine gute Halterung der Schleifleitung quer zur Längsrichtung, also bevorzugt in Höhenrichtung und/oder auch in seitlicher Richtung zur Längsrichtung erreicht werden. Vorteilhaft können die Schenkel dabei Rastvorsprünge und/oder Verbindungsöffnungen aufweisen, welche in korrespondierende Verbindungsöffnungen und/oder Rastvorsprünge der Schleifleitung und/oder des Verbindungsstücks eingreifen.

Weiter weist vorteilhaft das Halteelement mindestens ein Rastelement zur Verbindung mit einem Rastgegenelement des Montageelements auf. Ebenso kann bevorzugt das Halteelement mindestens ein Positionierelement für ein entsprechendes Positioniergegenelement des Montageelements aufweisen.

Ein eingangs genanntes Schleifleitungssystem ist erfindungsgemäß gekennzeichnet durch die kennzeichnenden Merkmale des Anspruch 9. Hierdurch kann die Schleifleitung sicher gehalten werden, und bevorzugt eine zum Beispiel durch Temperatureffekte bedingte Längsausdehnung einer Schleifleitung auf einfache Weise auszugleichen.

Die Erfindung erlaubt insbesondere, auf einfache Weise eine Schleifleitung in Längsrichtung einerseits fix und andererseits beweglich zu lagern. Dabei können die Halteelemente sich lediglich durch das Vorsehen bzw. Weglassen von Fixiervorsprüngen voneinander unterscheiden, welche in entsprechende Fixierausnehmungen an der Schleifleitung und/oder dem Verbindungsstück eingreifen. Zusätzlich oder alternativ können manche der Schleifleitungen bzw. Verbindungsstücke Fixiervorsprünge aufweisen, welche in entsprechende Fixierausnehmungen an den Halteelementen eingreifen.

Die Erfindung wird nachfolgend anhand von detaillierten Ausführungsbeispielen mit Bezug auf die begleitenden Zeichnungen beschrieben. Diese zeigen:
- **Fig. 1**: eine schematische dreidimensionale Ansicht eines erfindungsgemäßen Schleifleitungssystem;
- **Fig. 2**: eine Draufsicht auf das Schleifleitungssystem aus Fig. 1;
- **Fig. 3**: eine seitliche Schnittansicht des Schleifleitungssystems aus Fig. 2 längs der Schnittlinie A-A;
- **Fig. 4**: eine Seitenansicht des Schleifleitungssystems aus Fig. 1 von in Fig. 1 rechts unten;
- **Fig. 5**: eine Schnittansicht durch das Schleifleitungssystem aus Fig. 4 längs der Schnittlinie F-F;
- **Fig. 6**: einen vergrößerten Ausschnitt B der Schnittansicht des Schleifleitungssystems aus Fig. 3;
- **Fig. 7**: einen nochmals vergrößerter Ausschnitt D der Ansicht aus Fig. 6;

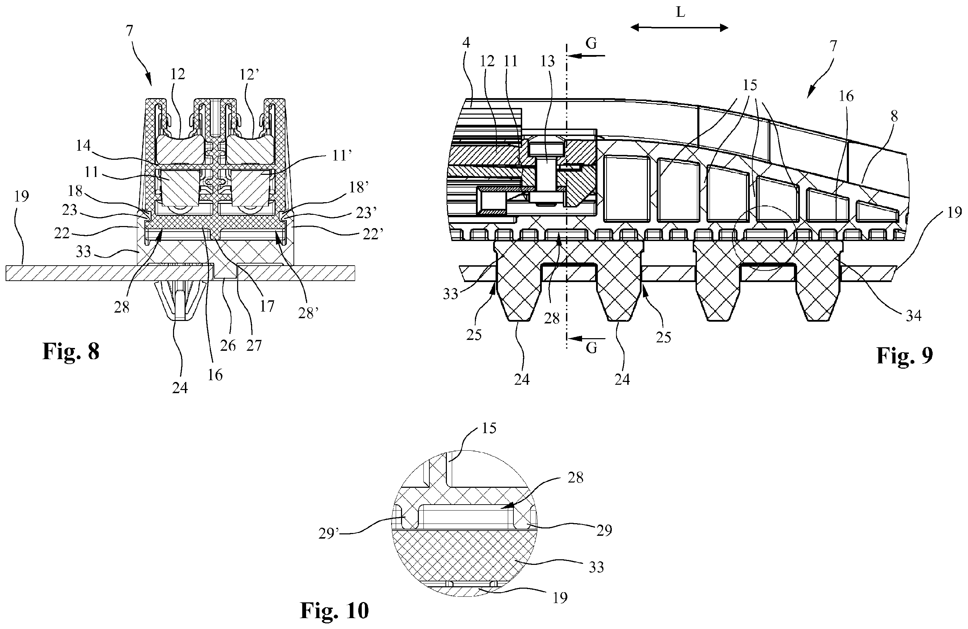

- **Fig. 8**: eine Schnittansicht durch das Schleifleitungssystem aus Fig. 4 längs der Schnittlinie G-G;
- **Fig. 9**: einen vergrößerten Ausschnitt C der Schnittansicht des Schleifleitungssystems aus Fig. 3;
- **Fig. 10**: einen nochmals vergrößerter Ausschnitt E des Ausschnitts C aus Fig. 9.

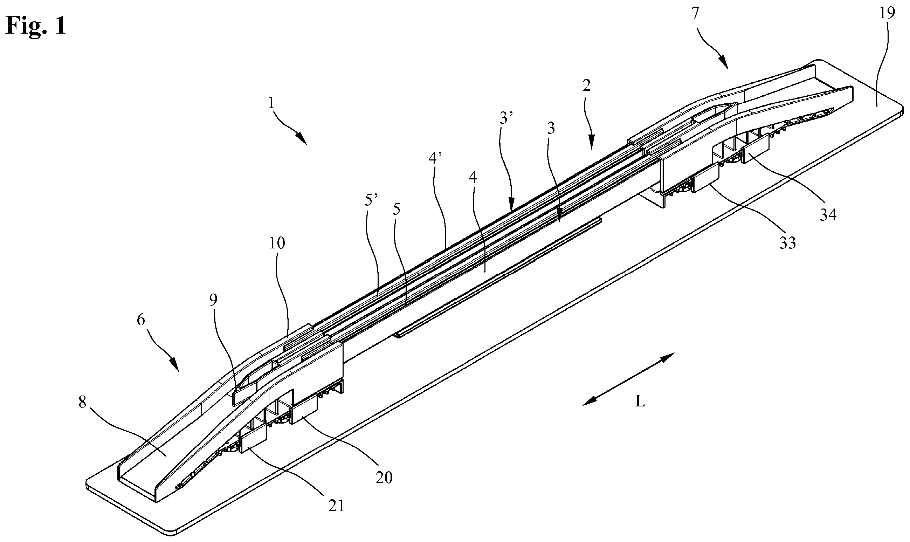

Fig. 1 zeigt eine schematische dreidimensionale Ansicht eines erfindungsgemäßen Schleifleitungssystems 1 mit einer an sich bekannten Schleifleitung 2, welche in Fig. 1 bis 4 ihre Längsrichtung L stark verkürzt dargstellt ist. Die Schleifleitung 2 weist zwei in Längsrichtung L verlaufende parallele Leiterstränge 3, 3' auf, welche jeweils in den Zeichnungen nach oben geöffnete Isolierprofile 4, 4' mit darin gehaltenen Stromschienen 5, 5' aufweisen. Die Stromschienen 5, 5' können durch nicht gezeigte paarweise nebeneinander angeordnete Schleifkontakte eines gegenüber der Schleifleitung 2 verfahrbaren elektrischen Verbrauchers kontaktiert werden. Oft werden die Stromschienen 5, 5' mit den Öffnungen zur Seite oder nach unten weisend montiert, aus Gründen der einfacheren Darstellbarkeit weisen die Öffnungen in den Zeichnungen aber nach oben.

Zum Einführen der Schleifkontakte in die Schleifleitung 2 sind am in Fig. 1 linken und rechten Ende der Schleifleitung 2 ein erster Ein-/Ausfahrtrichter 6 und ein zweiter Ein-/Ausfahrtrichter 7 angeordnet, welche aus Gründen der einfacheren Beschreibung im nachfolgenden als Einfahrtrichter 6 und Ausfahrtrichter 7 bezeichnet werden. Es wird deshalb nachfolgend nur der Einfahrtrichter 6 im Detail beschrieben, diese Ausführungen gelten entsprechend auch für den Ausfahrtrichter 7. Auch werden für gleiche Teile der beiden Trichter 6, 7 gleiche Bezugszeichen verwendet.

Der Einfahrtrichter 6 weist dabei eine sich von oben gesehen trichterförmig verjüngende, aus seitlicher Sicht nach oben ansteigende Einfahrrampe 8 auf, welche zum sauberen Positionieren der Schleifkontakte gegenüber den Leitersträngen 3, 3 dient. Eine keilförmige Einfädelhilfe 9 am Übergang zwischen der ansteigenden Einfahrrampe zum gerade verlaufenden Teil des Einfahrtrichters 6 sorgt dann dafür, dass die Schleifkontakte leicht in den jeweils für sie vorgesehenen Leiterstrang 3, 3' eingefädelt werden.

An die Einfahrrampe 8 schließt sich ein Anschlussbereich 10 an, an dem die Leiterstränge 3, 3' mit dem Einfahrtrichter 6 fest verbunden sind.

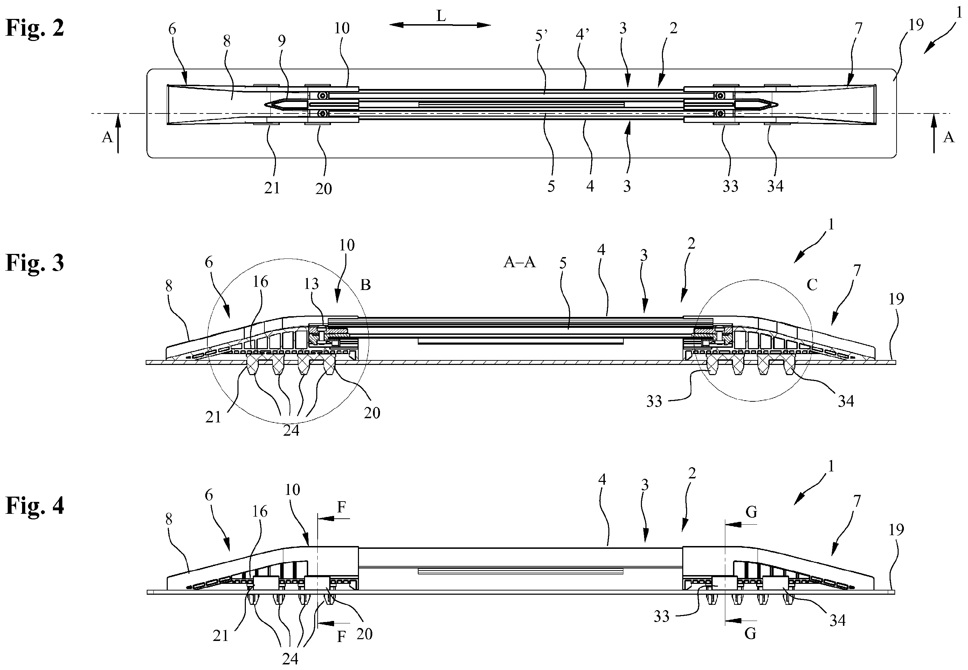

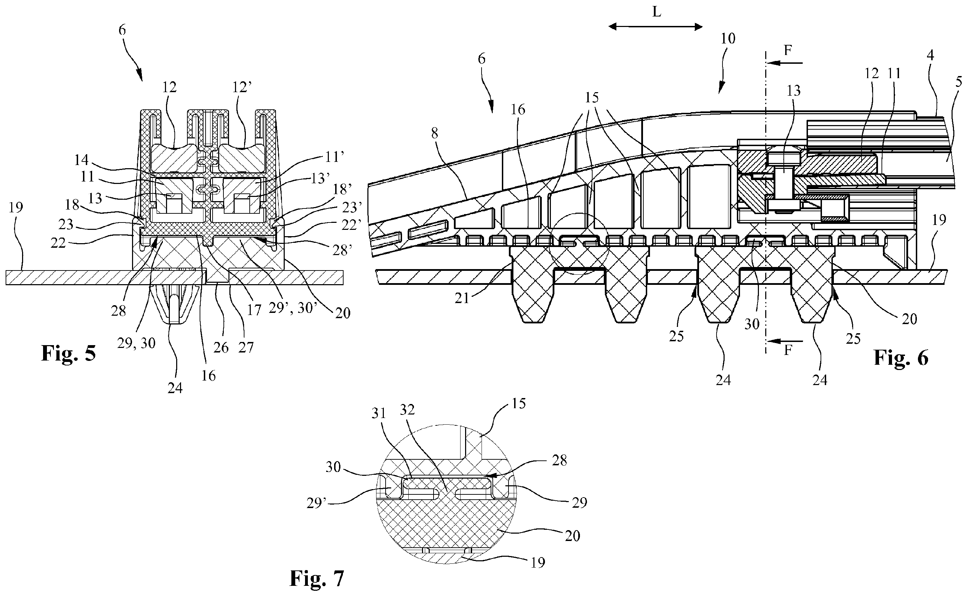

Wie insbesondere aus der Schnittansicht in Fig. 3 und dem Detail B, welches in Fig. 6 nochmals im Detail dargestellt ist, so wie der Schnittansicht in Fig. 5 entlang der Schnittlinie F-F in Fig. 3 und 6 hervorgeht, werden die Leiterstränge 3, 3' mittels zweier Klemmstücke 11, 12 am Einfahrtrichter 6 festgeklemmt. Dabei wird das untere Klemmstück 11 mittels einer Klemmschraube 13 an dem oberen Klemmstück 12 angeschraubt, wodurch sie an einer Klemmrippe 14 des Einfahrtrichters 6 angeklemmt werden. Da die Klemmstücke 11, 12 auch die Stromschienen 4, 4' umgreifen, werden auch diese hierdurch festgeklemmt und somit insbesondere in Längsrichtung fest an dem Einfahrtrichter 6 befestigt.

Der Einfahrtrichter 6 weist mehrere senkrechte Stabilisierungsrippen 15 auf, welche die Einfahrrampe 8 in vertikaler Richtung mit einer Auflage 16 verbinden. Die Auflage 16 erstreckt sich im wesentlichen in Längsrichtung L und bildet einen unteren, waagrechten Schenkel der im wesentlichen U-förmigen Struktur des Einfahrtrichters 6 aus, wie im Querschnitt von Fig. 5 gut erkennbar. Die Auflage 16 weist auf ihrer unteren Seite einen in Längsrichtung L verlaufenden Führungssteg 17 auf. An seinen in Fig. 5 seitlichen unteren Enden weist der Einfahrtrichter 6 im Bereich der Auflage 16 außenseitig zwei in Längsrichtung L verlaufende Verbindungsnuten 18, 18' auf.

Um den Einführtrichter 6 an einem Montageelement, vorliegend eine Montagefläche 19, zu befestigen, sind zwei identisch ausgebildete Halteelemente 20, 21 vorgesehen, so dass nachfolgend nur das eine, in der Querschnittsansicht in Fig. 5 gezeigte Halteelement 20 beschrieben wird. Entsprechende Ausführungen gelten auch für das nicht näher beschriebene weitere Halteelement 21.

Das bevorzugt aus Kunststoff hergestellte Halteelement 20 weist einen etwa U-förmigen Querschnitt mit in Längsrichtung L verlaufenden, einander gegenüberliegenden Schenkeln 22, 22' auf. An den freien Enden der Schenkel 22, 22' sind in Längsrichtung L verlaufende Rastvorsprünge 23, 23' angeordnet, welche in die seitlichen Verbindungsnuten 18, 18 eingreifen und somit den Einfahrtrichter 6 am Halteelement 20 quer zur Längsrichtung L, also sowohl in seitlicher Richtung als auch in Höhenrichtung fixieren.

Um das Halteelement 20 an der Montagefläche 19 zu befestigen, sind zwei in Längsrichtung L versetzte, identisch ausgebildete Montagedorne 24 vorgesehen, welche rastend in entsprechende Montageöffnungen 25 der Montagefläche 19 eingesteckt und dort verrastet werden.

Um das Halteelement 20 der richtigen Stellung an der Montagefläche 19 zu montieren, weist das Halteelement 20 einen Positionierdorn 26 auf, welcher in eine entsprechende Positionieröffnung 27 der Montagefläche 19 eingreift.

Dabei sind die Montageöffnungen 25 und die Positionieröffnung 27 und somit entsprechend auch die Montagedorne 24 und der Positionierdorn 26 bevorzugt in seitlicher Richtung zueinander versetzt angeordnet, so dass das Halteelement 20 nur in einer Stellung in die Montagefläche 19 eingesetzt werden kann. Um das einsetzen weiter zu erleichtern, können die Montageöffnungen 25 und die Positionieröffnung 27 und somit entsprechend auch die Montagedorne 24 und der Positionierdorn 26 bevorzugt unterschiedlich groß sein, um ein falsches Einsetzen zu vermeiden.

Anstelle der im Ausführungsbeispiel gezeigten Montierdorne 24 und des Positionierdorns 26 können auch andere Befestigungs- bzw. Positionierarten vorgesehen werden, welche bevorzugt eine einfache, schnelle und dennoch sichere Verbindung des Halteelements 20 ermöglichen. Bevorzugt kann die Befestigung dabei wieder lösbar sein, um das Halteelement 20 ggf. schnell austauschen zu können.

Um das Halteelement 20 und somit auch den Einführtrichter 6 auch in Längsrichtung L an der Montagefläche 19 festzulegen, weist der Einführtrichter 6 und insbesondere seine Auflage 16 an ihrer Unterseite muldenförmige Fixierausnehmungen 28, 28' auf, welche in Längsrichtung L bevorzugt durch quer zur Längsrichtung L verlaufende Fixierstege 29, 29' begrenzt sind. In die Fixierausnehmungen 28, 28' greifen dann entsprechend ausgebildete T-förmige Fixiervorsprünge 30, 30' des Halteelements 20 ein.

Wie aus der Detailansicht in Fig. 7 erkennbar, weist der Fixiervorsprung 30 eine Längsrichtung L an die Längserstreckung der Fixierausnehmungen 28 angepasste Fixierfläche 31 auf. Die Fixierfläche 31 ist über einen quer zur Längsrichtung L verlaufenden Haltesteg 32 an dem restlichen Teil des Halteelements 20 befestigt. Hierdurch kann vorteilhaft zusätzlich eine gewisse Elastizität in Längsrichtung L vorgesehen werden, so dass z. B. beim Befestigen des Einführtrichters 6 am bereits an der Montagefläche 19 angeordneten Halteelement 20 oder des bereits mit dem Einführtrichter 6 verbundenen Halteelements 20 an der Montagfläche 19 ein geringfügiger Versatz in Längsrichtung L ausgeglichen werden kann. Die Fixiervorsprünge 30, 30' können aber auch anders ausgebildet sein, beispielsweise als Dorne, Querstege oder vollständig aus dem Halteelement 20 hervorragende Vorsprünge.

Um den Ausfahrtrichter 7 in Längsrichtung L beweglich an der Montagefläche 19 befestigen zu können, unterscheiden sich die Halteelemente 33, 34 des Ausfahrtrichters 7 dadurch von den Halteelemente 20, 21 des Einfahrtrichters 6, dass die Halteelemente 33, 34 keine Fixiervorsprünge 30, 30' aufweisen. Der Ausfahrtrichter 7 wird dann durch die Halteelemente 33, 34 wie oben beschrieben in quer zur Längsrichtung L verlaufender seitlicher Richtung und in Höhenrichtung an der Montagefläche 19 fixiert, kann sich aber in Längsrichtung L frei bewegen. Hierdurch können Längenänderungen der Leiterstränge 3, 3' einfach ausgeglichen werden. Im vorliegenden Ausführungsbeispiel wurde lediglich eine einheitliche Montagefläche 19 dargestellt, ebenso können der Einfahrtrichter 6 und der Ausfahrtrichter 7 auch an voneinander getrennten Montageelementen angeordnet werden, beispielsweise einer Aufständerung für eine längere Schleifleitung.

Bei der im vorliegendem Ausführungsbeispiel gezeigten Ausgestaltung der Fixiervorsprünge 30, 30' mit dem schmalen Haltesteg 32, 32' können die Halteelemente 33, 34 ohne Fixiervorsprünge 30, 30' für die längsbewegliche Lagerung einfach dadurch hergestellt werden, dass bei den Halteelementen 20, 21 die Fixiervorsprünge 30, 30' am Montageort entfernt werden. Dies kann einfach durch Durchtrennen der schmalen Haltestege 32, 32' mit einem Messer oder ähnlichem Werkzeug geschehen. Hierdurch ergibt sich der fertigungs- und montagetechnische Vorteil, dass nur eine Version der Halteelemente hergestellt und zur Montage des Schleifleitungssystems 1 mit an den Montageort gebracht werden muss, nämlich die in Figuren 5 bis 7 gezeigten Halteelemente 20, 21 mit den noch daran befindlichen Fixiervorsprüngen 30, 30'.

### Bezugszeichen

- 1: Schleifleitungssystem
- 2: Schleifleitung
- 3, 3': Leiterstränge
- 4, 4': Isolierprofil
- 5, 5': Stromschienen
- 6: Einfahrtrichter (Verbindungsstück)
- 7: Ausfahrtrichter (Verbindungsstück)
- 8: Einfahrrampe
- 9: Einfädelhilfe
- 10: Anschlussbereich
- 11, 11': unteres Klemmstück
- 12, 12': oberes Klemmstück
- 13, 13': Befestigungsschraube
- 14: Klemmrippe
- 15: Stabilisierungsrippen
- 16: Auflage
- 17: Führungssteg
- 18, 18': seitliche Verbindungsnuten
- 19: Montagefläche
- 20, 21: Halteelemente Einfahrtrichter
- 22, 22': Schenkel Halteelement
- 23, 23': Rastvorsprünge
- 24: Montagedorne
- 25: Montageöffnungen
- 26: Positionierdorn
- 27: Positionieröffnung
- 28, 28': muldenförmige Fixierausnehmungen
- 29, 29': Fixierstege
- 30, 30': T-förmige Fixiervorsprünge
- 31: Fixierfläche
- 32, 32': Haltesteg
- 33, 34: Halteelemente Ausfahrtrichter

- L: Längsrichtung Schleifleitung

## Patentansprüche

1. Befestigungsvorrichtung (7, 33, 34) zur Befestigung einer Schleifleitung (2) an mindestens einem Montageelement (19), mit mindestens einem mit der Schleifleitung (2) verbindbaren Halteelement (33, 34), wobei das Halteelement (33, 34) die Schleifleitung (2) quer zu ihrer Längsrichtung (L) unbeweglich an dem Montageelement (19) befestigt, wobei die Befestigungsvorrichtung (7, 33, 34) ein Verbindungsstück (7) zur festen Befestigung an der Schleifleitung (2) einerseits und zur in Längsrichtung (L) beweglichen Verbindung mit dem Halteelement (33, 34) andererseits aufweist, **dadurch gekennzeichnet, dass** das Halteelement (20, 21; 33, 34) mindestens ein Rastelement (24) zur Verbindung mit einem Rastgegenelement (25) des Montageelements (19) aufweist.

2. Befestigungsvorrichtung (6, 20, 21; 7, 33, 34) nach Anspruch 1, **dadurch gekennzeichnet, dass** das Halteelement (20, 21; 33, 34) die Schleifleitung (2) in ihrer Längsrichtung (L) beweglich an dem Montageelement (19) hält.

3. Befestigungsvorrichtung (6, 20, 21; 7, 33, 34) nach einem der voranstehenden Ansprüche, **dadurch gekennzeichnet, dass** das Halteelement (20, 21; 33, 34) Fixiervorsprünge (30, 30') und/oder Fixierausnehmungen (28, 28') aufweist, die in korrespondierende Fixierausnehmungen (28, 28') und/oder Fixiervorsprünge (30, 30') an der Schleifleitung (2) oder dem Verbindungsstück (6, 7) eingreifen.

4. Befestigungsvorrichtung (6, 20, 21; 7, 33, 34) nach Anspruch 3, **dadurch gekennzeichnet, dass** die Fixiervorsprünge (30, 30') zur einfachen Entfernung eine Materialdünnstelle (32, 32'), insbesondere eine Sollbruchstelle aufweisen.

5. Befestigungsvorrichtung (6, 20, 21; 7, 33, 34) nach einem der voranstehenden Ansprüche, **dadurch gekennzeichnet, dass** das Verbindungsstück ein Ein-/Ausfahrtrichter (6; 7) für Schleifkontakte eines längs der Schleifleitung (2) beweglichen elektrischen Verbrauchers ist.

6. Befestigungsvorrichtung (6, 20, 21; 7, 33, 34) nach einem der voranstehenden Ansprüche, **dadurch gekennzeichnet, dass** das Halteelement (20, 21; 33, 34) einander quer zur Längsrichtung (L) gegenüberliegende Schenkel (22, 22') aufweist, welche die Schleifleitung (2) und/oder das Verbindungsstück (6; 7) umgreifen.

7. Befestigungsvorrichtung (6, 20, 21; 7, 33, 34) nach Anspruch 6, **dadurch gekennzeichnet, dass** die Schenkel (22, 22') Rastvorsprünge (23, 23') und/oder Verbindungsöffnungen aufweisen, welche in korrespondierende Verbindungsöffnungen (18, 18') und/oder Rastvorsprünge der Schleifleitung (2) und/oder des Verbindungsstücks (6; 7) eingreifen.

8. Befestigungsvorrichtung (6, 20, 21; 7, 33, 34) nach einem der voranstehenden Ansprüche, **dadurch gekennzeichnet, dass** das Halteelement (20, 21; 33, 34) mindestens ein Positionierelement (26) für ein entsprechendes Positioniergegenelement (27) des Montageelements (19) aufweist.

9. Schleifleitungssystem (1) mit einer Schleifleitung (2), die mit einer ersten Befestigungsvorrichtung (6, 20, 21) an einem ersten Montageelement (19) und einer hiervon in einer Längsrichtung (L) der Schleifleitung (2) beabstandeten zweiten Befestigungsvorrichtung (7, 33, 34) an dem ersten Montageelement (19) oder einem zweiten Montageelement (19) befestigt ist, wobei die erste Befestigungsvorrichtung (6, 20, 21) in Längsrichtung (L) unbeweglich mit der Schleifleitung (2) und mit dem ersten Montageelement (19) verbunden ist, wobei die erste Befestigungsvorrichtung (6, 20, 21) zur Befestigung der Schleifleitung (2) an dem ersten Montageelement (19) mindestens ein mit der Schleifleitung (2) verbindbares Halteelement (20, 21) aufweist, wobei das Halteelement (20, 21) die Schleifleitung (2) quer zu ihrer Längsrichtung (L) unbeweglich an dem Montageelement (19) befestigt, und wobei die erste Befestigungsvorrichtung (6, 20, 21) ein Verbindungsstück (6) zur festen Befestigung an der Schleifleitung (2) einerseits und zur in Längsrichtung (L) festen Verbindung mit dem Halteelement (20, 21) andererseits aufweist, **dadurch gekennzeichnet, dass** die zweite Befestigungsvorrichtung (7, 33, 34) nach einem der Ansprüche 1 bis 8 ausgebildet ist, wobei das Verbindungsstück (7) der zweiten Befestigungsvorrichtung (33, 34) einerseits fest an der Schleifleitung (2) befestigt und andererseits zur in Längsrichtung (L) beweglichen Verbindung mit dem Halteelement (33, 34) der zweiten Befestigungsvorrichtung (33, 34) verbunden ist, wobei das mindestens ein Rastelement (24) des Halteelements (33, 34) der zweiten Befestigungsvorrichtung (33, 34) mit einem Rastgegenelement (25) des ersten oder zweiten Montageelements (19) zur beweglichen Verbindung der Schleifleitung (2) mit dem ersten oder zweiten Montageelement (19) verbunden ist.

10. Schleifleitungssystem (1) nach Anspruch 9, **dadurch gekennzeichnet, dass** die erste Befestigungsvorrichtung (6, 20, 21) die Merkmale eines der Ansprüche 3 bis 8 aufweist.

## Claims

1. Fastening device (7, 33, 34) for fastening a conductor rail (2) to at least one mounting element (19), having at least one holding element (33, 34) which can be connected to the conductor rail (2), the holding element (33, 34) fastening the conductor rail (2) transversely to its longitudinal direction (L) immovably to the mounting element (19), whereby the fastening device (7, 33, 34) comprises a connecting piece (7) for fixed fastening to the conductor rail (2) on the one hand and for movable connection in the longitudinal direction (L) to the holding element (33, 34) on the other hand, **characterised in that** the holding element (20, 21; 33, 34) has at least one latching element (24) for connection to a latching counter-element (25) of the mounting element (19).

2. Fastening device (6, 20, 21; 7, 33, 34) according to claim 1, **characterized in that** the holding element (20, 21; 33, 34) holds the conductor rail (2) movably in its longitudinal direction (L) on the mounting element (19).

3. Fastening device (6, 20, 21; 7, 33, 34) according to one of the preceding claims, **characterized in that** the holding element (20, 21; 33, 34) has fixing projections (30, 30') and/or fixing recesses (28, 28') which engage in corresponding fixing recesses (28, 28') and/or fixing projections (30, 30') on the conductor rail (2) or the connecting piece (6; 7).

4. Fastening device (6, 20, 21; 7, 33, 34) according to claim 3, **characterised in that** the fixing projections (30, 30') have a material thinning area (32, 32'), in particular a predetermined breaking point, for easy removal.

5. Fastening device (6, 20, 21; 7, 33, 34) according to one of the preceding claims, **characterised in that** the connecting piece is an entry/exit funnel (6; 7) for sliding contacts of an electrical consumer movable along the conductor rail (2).

6. Fastening device (6, 20, 21; 7, 33, 34) according to one of the preceding claims, **characterised in that** the holding element (20, 21; 33, 34) has legs (22, 22') which lie opposite one another transversely to the longitudinal direction (L) and which embrace the conductor rail (2) and/or the connecting piece (6; 7).

7. Fastening device (6, 20, 21; 7, 33, 34) according to claim 6, **characterized in that** the legs (22, 22') have latching projections (23, 23') and/or connecting openings which engage in corresponding connecting openings (18, 18') and/or latching projections of the conductor rail (2) and/or of the connecting piece (6; 7).

8. Fastening device (6, 20, 21; 7, 33, 34) according to one of the preceding claims, **characterized in that** the holding element (20, 21; 33, 34) comprises at least one positioning element (26) for a corresponding positioning counter-element (27) of the mounting element (19).

9. Conductor rail system (1) having a conductor rail (2) which is fastened to a first mounting element (19) by means of a first fastening device (6, 20, 21) and to the first mounting element (19) or a second mounting element (19) by means of a second fastening device (7, 33, 34) spaced apart therefrom in a longitudinal direction (L) of the conductor rail (2), the first fastening device (6, 20, 21) being immovably connected in the longitudinal direction (L) to the conductor rail (2) and to the first mounting element (19), the first fastening device (6, 20, 21) having, for fastening the conductor rail (2) to the first mounting element (19), at least one holding element (20, 21) which can be connected to the conductor rail (2), the holding element (20, 21) fixing the conductor rail (2) immovably transversely with respect to its longitudinal direction (L) to the mounting element (19), and the first fastening device (6, 20, 21) having a connecting piece (6) for fixed fixing to the conductor rail (2) on the one hand and for fixed connection to the holding element (20, 21) on the other hand, **characterized in that** the second fastening device (7, 33, 34) being designed according to one of the claims 1 to 8, wherein the connecting piece (7) of the second fastening device (33, 34) is fixedly attached to the conductor rail (2) on the one hand and connected to the holding element (33, 34) for longitudinally movable connection with the holding element (33,34) of the second fastening device (33, 34) on the other hand, wherein the at least one latching element (24) of the holding element (33, 34) of the second fastening device (33, 34) is connected with a latching counter-element (25) of the first or the second mounting element (19) for movable connection of the conductor rail (2) with the first or the second mounting element (19).

10. A conductor rail system (1) according to claim 9, **characterised in that** the first fastening device (6, 20, 21) has the features of any one of claims 3 to 8.

## Revendications

1. Dispositif de fixation (7, 33, 34) pour la fixation d'une ligne de contact (2) sur au moins un élément de montage (19), avec au moins un élément de retenue (33, 34) pouvant être relié à la ligne de contact (2), dans lequel l'élément de retenue (33, 34) fixe la ligne de contact (2) transversalement par rapport à sa direction longitudinale (L) de manière immobile sur l'élément de montage (19), dans lequel le dispositif de fixation (7, 33, 34) présente une pièce de liaison (7) pour la fixation à demeure sur la ligne de contact (2) d'une part et pour la liaison mobile dans la direction longitudinale (L) à l'élément de retenue (33, 34) d'autre part, **caractérisé en ce que** l'élément de retenue (20, 21 ; 33, 34) présente au moins un élément d'encliquetage (24) pour la liaison à un contre-élément d'encliquetage (25) de l'élément de montage (19).

2. Dispositif de fixation (6, 20, 21 ; 7, 33, 34) selon la revendication 1, **caractérisé en ce que** l'élément de retenue (20, 21 ; 33, 34) retient la ligne de contact (2) dans sa direction longitudinale (L) de manière mobile sur l'élément de montage (19).

3. Dispositif de fixation (6, 20, 21 ; 7, 33, 34) selon l'une quelconque des revendications précédentes, **caractérisé en ce que** l'élément de retenue (20, 21 ; 33, 34) présente des parties saillantes de fixation (30, 30') et/ou évidements de fixation (28, 28'), qui s'insèrent dans des évidements de fixation (28, 28') et/ou parties saillantes de fixation (30, 30') correspondants sur la ligne de contact (2) ou la pièce de liaison (6 ; 7).

4. Dispositif de fixation (6, 20, 21 ; 7, 33, 34) selon la revendication 3, **caractérisé en ce que** les parties saillantes de fixation (30, 30') pour un retrait facile présentent un point mince de matière (32, 32'), en particulier un point de rupture.

5. Dispositif de fixation (6, 20, 21 ; 7, 33, 34) selon l'une quelconque des revendications précédentes, **caractérisé en ce que** la pièce de liaison est un entonnoir d'entrée/de sortie (6 ; 7) pour les contacts glissants d'un consommateur électrique mobile le long de la ligne de contact (2).

6. Dispositif de fixation (6, 20, 21 ; 7, 33, 34) selon l'une quelconque des revendications précédentes, **caractérisé en ce que** l'élément de retenue (20, 21 ; 33, 34) présente des branches (22, 22') opposées l'une à l'autre transversalement par rapport à la direction longitudinale (L), lesquelles entourent la ligne de contact (2) et/ou la pièce de liaison (6 ; 7).

7. Dispositif de fixation (6, 20, 21 ; 7, 33, 34) selon la revendication 6, **caractérisé en ce que** les branches (22, 22') présentent des parties saillantes d'encliquetage (23, 23') et/ou ouvertures de liaison, lesquelles s'insèrent dans des ouvertures de liaison (18, 18') et/ou parties saillantes d'encliquetage correspondantes de la ligne de contact (2) et/ou de la pièce de liaison (6 ; 7).

8. Dispositif de fixation (6, 20, 21 ; 7, 33, 34) selon l'une quelconque des revendications précédentes, **caractérisé en ce que** l'élément de retenue (20, 21 ; 33, 34) présente au moins un élément de positionnement (26) pour un contre-élément de positionnement (27) correspondant de l'élément de montage (19).

9. Système de ligne de contact (1) avec une ligne de contact (2), qui est fixée avec un premier dispositif de fixation (6, 20, 21) sur un premier élément de montage (19) et un deuxième dispositif de fixation (7, 33, 34) espacé de celui-ci dans une direction longitudinale (L) de la ligne de contact (2) sur le premier élément de montage (19) ou un deuxième élément de montage (19), dans lequel le premier dispositif de fixation (6, 20, 21) est relié dans la direction longitudinale (L) de manière immobile à la ligne de contact (2) et au premier élément de montage (19), dans lequel le premier dispositif de fixation (6, 20, 21) pour la fixation de la ligne de contact (2) sur le premier élément de montage (19) présente au moins un élément de retenue (20, 21) pouvant être relié à la ligne de contact (2), dans lequel l'élément de retenue (20, 21) fixe la ligne de contact (2) transversalement par rapport à sa direction longitudinale (L) de manière immobile sur l'élément de montage (19), et dans lequel le premier dispositif de fixation (6, 20, 21) présente une pièce de liaison (6) pour la fixation à demeure sur la ligne de contact (2) d'une part et pour la liaison fixe dans la direction longitudinale (L) à l'élément de retenue (20, 21) d'autre part, **caractérisé en ce que** le deuxième dispositif de fixation (7, 33, 34) est réalisé selon l'une quelconque des revendications 1 à 8, dans lequel la pièce de liaison (7) du deuxième dispositif de fixation (33, 34) d'une part est fixée à demeure sur la ligne de contact (2) et d'autre part pour la liaison mobile dans la direction longitudinale (L) est reliée à l'élément de retenue (33, 34) du deuxième dispositif de fixation (33, 34), dans lequel l'au moins un élément d'encliquetage (24) de l'élément de retenue (33, 34) du deuxième dispositif de fixation (33, 34) est relié à un contre-élément d'encliquetage (25) du premier ou deuxième élément de montage (19) pour la liaison mobile de la ligne de contact (2) au premier ou deuxième élément de montage (19) .

10. Système de ligne de contact (1) selon la revendication 9, **caractérisé en ce que** le premier dispositif de fixation (6, 20, 21) présente les caractéristiques d'une des revendications 3 à 8.
